# EUROPEAN PATENT APPLICATION

(11) **EP 2 801 849 A1**
(43) Date of publication of application: **12.11.2014**
(21) Application number: 13193664.3
(22) Date of filing: 20.11.2013
(51) Int. Cl.: G02B 6/122

(54) **Wave guide, method of producing a waveguide and method for establishing a core height value, a core width value and thickness values of cladding layers in a waveguide insensitive to fabrication fluctuations**

(30) Priority: 08.05.2013 EP 13167061
(71) Applicant: AIP Leibniz-Institut für Astrophysik, 14482 Potsdam (DE)
(72) Inventor: Chavez Boggio, Jose, 10551 Berlin (DE); Bodenmüller, Daniel, 14469 Potsdam (DE); Fremberg, Tino, 14471 Potsdam (DE)
(74) Representative: Theobald, Andreas

(57) **Abstract**

A waveguide comprising a core (1) with a refractive index and a multicladding arrangement (3) on top of the core (1) is provided. In the waveguide,
- the multi-cladding arrangement (3) consists of a staple of one or more cladding layer pairs (8, 10);
- each cladding layer pair (8,10) is composed of an upper cladding layer (7, 11) having a first refractive index *n* ₁ that equals the refractive index of the core (1) and a lower cladding layer (5, 9) having a second refractive index *n* ₂,
- the ratio *n* ₁/*n* ₂ of the first refractive index *n* ₁ to the second refractive index *n* ₂ is between 1.25 and 1.45, and
- the core (1) and the multi-cladding arrangement (3) are embedded in an outer cladding (2, 2A) having a refractive index that equals the second refractive index *n* ₂.

In addition, a method of producing a waveguide with a desired dispersion value and a flat dispersion profile, and a method for establishing a core height value, a core width value and thickness values of cladding layers in a waveguide are provided.

## Description

The present invention relates to a waveguide, to a method of producing a waveguide with a desired dispersion value and a flat dispersion profile, and to a method for establishing a core height value, a core width value and thickness values of cladding layers in a waveguide. It addresses the technical issue of arbitrarily engineering the dispersion (second and third order) in planar waveguides, in particular CMOS-compatible integrated waveguides.

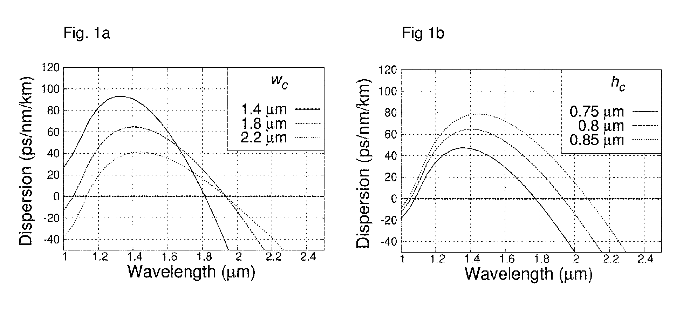

Chromatic dispersion is a parameter of paramount importance in waveguides because it determines the way that light propagates therein. The dispersion in a waveguide has two contributions: material and geometrical dispersion - by manipulating these two contributions, the dispersion can be in principle engineered at will. Nowadays, the chromatic dispersion is experimentally modified just by changing the core transversal dimensions (core width *w_{c}* and core height *h_{c}*) of the waveguide. An example of such a modification is shown in Figure 1, where the dispersion is plotted for a waveguide having a core consisting of silicon nitride and a cladding of silica. Altering *w_{c}* and *h_{c}* for modifying the dispersion in integrated waveguides is described in M, A. Foster, A. C. Turner, J. E. Sharping, B. S. Schmidt, M. Lipson, and A. L. Gaeta, "Broad-band optical parametric gain on a silicon photonic chip," Nature 441, 960-963 (2006); in D. T. H. Tan, K. Ikeda, P. C. Sun, and Y. Fainman, "Group velocity dispersion and self-phase modulation in silicon nitride waveguides," Appl. Phis. Lett. 96, 061101 (2010); and in Y. Okawachi, K. Saha, J. S. Levy, Y. H. Wen, M. Lipson, and A. L. Gaeta "Octave-spanning frequency comb generation in a silicon nitride chip," Opt. Lett., 36, 3398-3400 (2011). An alteration of *w_{c}* and *h_{c}* modifies the dispersion in a rather limited way. However, in order that high-performance photonic functionalities can be feasible in integrated waveguides based on cost-effective CMOS technology, the dispersion must be arbitrarily modified. In this respect, one particular goal is minimizing and flattening the dispersion profile over broad bandwidths.

Dispersion engineering in integrated waveguides has been explored by some groups through numerical simulations. The first proposal, by X. Liu, W. M. Green, I.-W. Hsieh, J. I. Dadap, Y. A. Vlasov, and R. M. Osgood, Jr., "Dispersion engineering on silicon photonic wires using thin Si3N4 conformal dielectric coating," Opt. Lett., 33, 2889-2891 (2008), consisted in adding a very thin (60 nm) silicon nitride layer on top of a silicon core. By varying the thickness of this layer from 0 to 60 nm, it was observed that the dispersion (e.g. at 1550 nm) changes by tens of ps/nm/km. The other proposed way to modify the dispersion is the inclusion of a horizontal or vertical slot in a waveguide with a silicon core. This way was proposed in L. Zhang, Y. Yue, R. G. Beausoleil, and A. E. Willner, "Flattened dispersion in silicon slot waveguides," Opt. Express, vol. 18, no. 19, pp. 20529-20534, Sep. 2010 and in Y. Yue, L. Zhang, H. Huang, R. G. Beausoleil, and A. E. Willner, "Silicon-on-nitride waveguide with ultralow dispersion over an octave-spanning mid-infrared wavelength range," IEEE Photonics Journal, 4, 126-132 (2012). The only experimental attempt to engineer dispersion was recently done by adding a 60-nm thick Hafnium dioxide layer on top of a silicon nitride core. This attempt is described in J. Reimensberger, K. Hartinger, T. Herr, V. Branch, R. Holzwarth, and T.J. Kippenberg "Dispersion engineered high-Q silicon nitride ring-resonators via atomic layer deposition," Optics Express, 20, 27661-27669 (2012). In the attempt described by J. Reimensberger et al. the dispersion could be slightly increased to become more anomalous, showing promise for a more accurate dispersion control if this engineering is done in a fully elaborated way. However, the underlying engineering mechanism (small contrast refractive index between the hafnium dioxide layer and the silicon nitride core) only allows for a very limited modification of the dispersion profile.

With respect to the mentioned state of the art is a first objective of the present invention to provide an advantageous waveguide. A second objective of the present invention is to provide a method of producing a waveguide with a desired dispersion value and a flat dispersion profile. A third objective of the present invention is to provide a method for establishing a core height value, a core width value and thickness values of the cladding layers in a waveguide.

The first objective is achieved according to a first aspect of the present invention by a waveguide as claimed in claim 1 and according to a second aspect of the present invention by a waveguide as claimed in claim 9. The second objective is achieved by a method of producing a waveguide with a desired dispersion value and a flat dispersion profile according to claim 7. The third objective is achieved by a method as claimed in claim 14. The depending claims contain further developments of the invention.

A waveguide according to the first aspect of the invention comprises a core with a refractive index and a multi-cladding arrangement on top of the core where the multi-cladding arrangement consists of a staple of one or more cladding layer pairs. Each cladding layer pair is composed of an upper cladding layer having a first refractive index *n*₁ that equals the refractive index of the core and a lower cladding layer having a second refractive index *n*₂. The ratio *n*₁/*n*₂ of the first refractive index *n*₁ to the second refractive index *n*₂ is between 1.25 and 1.45. In a one exemplary embodiment, the multi-cladding arrangement has one cladding layer pair. In another exemplary embodiment, the multi-cladding arrangement has two cladding layer pairs. The core and the multi-cladding layer arrangement are embedded in an outer cladding having refractive index *n*₂.

The waveguide according to the first aspect of the invention allows for negative (also called anomalous) and positive (also called normal) dispersions with flat dispersion profiles in the near infrared over one octave bandwidth and is robust to parameters fluctuations during the waveguide fabrication. The inventive waveguide has the following properties:
- The second order dispersion (chromatic dispersion) can be flattened (+/- 0.5 ps/nm/km variation) over more than 1000 nm.
- The third order dispersion can be flattened (+/- 0.01 ps/nm²/km variation) over more than 1000 nm.
- The dispersion can be vertically shifted, without changing its flatness, by simply changing the thickness of the cladding layer directly adjoining the core.
- By correctly choosing the ratio between *n*₁/*n*₂ within the range from 1.25 to 1.45, the dispersion engineering capabilities are maximized while being robust to fluctuations of the refractive index and dimensions of the core and the cladding layers.
- The mode area is kept small to enhance the nonlinear properties.
- If the multi-cladding arrangement has two cladding layer pairs, profiles with positive (anomalous) or negative (normal) dispersion and with dispersion varying less than 5 ps/nm/km over at least 1000 nm are possible with the inventive waveguide. In particular, dispersions varying less than 1 ps/nm/km over at least 1000 nm, or varying less than 5 ps/nm/km over at least 1200 nm can be achieved.

In an advantageous implementation of the inventive waveguide, the core and each upper cladding layer are made of silicon nitride (Si_{X}N_{Y}) while each lower cladding layer is made of silica (silicon dioxide, SiO₂). These materials are easy to handle and are compatible with CMOS fabrication processes. In a waveguide according to this advantageous implementation, the core may have a core height with a core height value in the range between 0.2 µm and 1.0 µm and a core width with a core width value in the range between 0.5 µm and 2.5 µm. Moreover, the cladding layers of the cladding layer pairs may have cladding layer thicknesses with thickness values in the range between 0.01 µm and 0.5 µm. These parameter ranges are advantageous for achieving the above-mentioned anomalous and normal dispersions with flat dispersion profiles.

A waveguide according to the second aspect of the invention comprises a core with a refractive index and a multi-cladding arrangement on top of the core. The multi-cladding arrangement includes at least a first cladding layer having a first refractive index *n*₁ that equals the refractive index of the core and a second cladding layer having a second refractive index *n*₂. The second cladding layer is sandwiched between the core and the first cladding layer and the ratio *n*₁/*n*₂ of the first refractive index *n*₁ to the second refractive index n2 is in the range of 1.25 to 1.45. The core and the multi-cladding layer arrangement are embedded in an outer cladding having refractive index *n*₂.

The waveguide according to the second aspect of the invention allows for anomalous and normal dispersions with flat dispersion profiles in the near infrared over one octave bandwidth and is robust to parameters fluctuations during the waveguide fabrication. The inventive waveguide has the following properties:
- The second order dispersion can be flattened (+/- 0.5 ps/nm/km variation) over more than 1000 nm.
- The third order dispersion can be flattened (+/- 0.01 ps/nm²/km variation) over more than 1000 nm.
- The dispersion can be vertically shifted, without changing its flatness, by simply changing the thickness of the cladding layer directly adjoining the core.
- By correctly choosing the ratio between *n*₁/*n*₂ within the range from 1.25 to 1.45, the dispersion engineering capabilities are maximized while being robust to fluctuations of the refractive index and dimensions of the core and the cladding layers.
- The mode area is kept small to enhance the nonlinear properties.

In a particular implementation of the waveguide according to the second aspect of the invention, the core and the first cladding layer are made of silicon nitride (Si_{X}N_{Y}) while the second cladding layer is made of silica (SiO₂). These materials are easy to handle and are compatible with CMOS fabrication processes.

According to a further development of the waveguide according to the second aspect of the invention, the multi-cladding arrangement further includes at least a third cladding layer having a third refractive index that equals the first refractive index *n*₁ and a fourth cladding layer having a fourth refractive index that equals the second refractive index *n*₂. The fourth cladding layer is sandwiched between the third cladding layer and the first cladding layer. By this further development dispersion profiles with negative (anomalous) or positive (normal) dispersion can be achieved with the inventive waveguide. In a particular implementation of this further development, the third cladding layer is made of silicon nitride (Si_{X}N_{Y}) while the fourth cladding layer is made of silica (SiO₂). This is particularly advantageous if the core and the first cladding layer are made of silicon nitride while the second cladding layer is made of silica.

In the waveguide according to the second aspect of the invention, the core may have a core height with a core height value in the range between 0.2 µm and 1.0 µm and a core width with a core width value in the range between 0.5 µm and 2.5 µm. Moreover, the cladding layers may have cladding layer thicknesses with thickness values in the range between 0.01 µm and 0.5 µm. These parameter ranges are advantageous for achieving the above-mentioned negative (anomalous) and positive (normal) dispersions with flat dispersion profiles and low insensitiveness to fabrication fluctuations.

The inventive method for producing a waveguide with a desired dispersion value and a flat dispersion profile comprises the steps providing a layer of an outer cladding on a substrate, in particular on a silicon substrate; providing a core with a refractive index *n*₁ on the layer of the outer cladding; and applying a multi-cladding arrangement on top of the core. The multi-cladding arrangement consists of a staple of one or more cladding layer pairs where each cladding layer pair is composed of an upper cladding layer having a first refractive index *n*₁ that equals the refractive index of the core and a lower cladding layer having a second refractive index *n*₂. The ratio *n*₁/*n*₂ of the first refractive index *n*₁ to the second refractive index *n*₂ is set to a value in the range between 1.25 and 1.45. In a further step, the outer cladding, which has a refractive index that equals the second refractive index *n*₂, is finished so that the core and the multi-cladding layer arrangement are embedded in an outer cladding having refractive index *n*₂.

The inventive method allows for producing an inventive waveguide.

In a particular implementation of the inventive method, the core may be provided with a core height having a core height value in the range between 0.2 µm and 1.0 µm and with a core width having a core width value in the range between 0.5 µm and 2.5 µm, and each cladding layer of the at least one cladding layer pair of the multi-cladding arrangement may be applied up to a cladding layer thickness having a thickness value in the range between 0.01 µm and 0.5 µm.

In addition, the invention provides a method for establishing a core height value, a core width value and thickness values of the cladding layers in an inventive waveguide, or for establishing a core height value, a core width value and thickness values of cladding layers used in the inventive method of producing a waveguide. The dispersion engineering is done by progressive optimization in two steps where, in a first step, a preliminary core height value, a preliminary core width value and preliminary thickness values of the cladding layers are obtained by optimizing an initial core height value, an initial core width value and initial thickness values of the cladding layers so that the resulting dispersion is between ± 20 ps/nm/km at least for wavelengths in the range from 1.4 µm, preferably from 1.3 µm, up to 1.9 µm, preferably up to 2.2 µm, even more preferably up to 2.4 µm. Then, in a second step, the preliminary core height value, the preliminary core width value and the preliminary thickness values of the cladding layers are further optimized to shift the dispersion profile to desired higher or lower dispersion values. As an alternative, the dispersion engineered profile can be retrieved using an optimization algorithm (for ex. a genetic algorithm).

The described optimization procedure allows for finding the optimum values for the core height, the core width and the thicknesses of the cladding layers in order to achieve a flat dispersion profile with desired dispersion values.

If the cladding layer arrangement comprises a first pair of cladding layers and a second pair of cladding layers the thickness values of the cladding layers of the second pair of cladding layers may advantageously be used in an optimization step for flattening the dispersion profile.

The present invention provides a waveguide and a method of producing the same in which even when there is random fluctuation of the optimized core height, core width and cladding thicknesses by values typically produced due to fabrication errors, the optimized dispersion profile will be nearly unchanged.

Further features, properties and advantages of the present invention will become clear from the following description of exemplary embodiments in conjunction with the accompanying drawings.
- Figure 1: shows the dispersion as a function of wavelength in a state of the art waveguide.
- Figure 2: schematically shows an inventive waveguide.
- Figure 3: shows the dispersion as a function of wavelength and a corresponding bandwidth as function of the flatness.
- Figure 4: shows the dispersion as the thickness of the cladding layer adjoining the core of the waveguide is changed and, for two different cladding materials, the effective mode area as a function of wavelength.
- Figure 5: shows the dispersion as a function of wavelength for different core height values and the corresponding bandwidth as a function of the given flatness.
- Figure 6: shows the dispersion as a function of wavelength for a waveguide with two cladding layers and a waveguide with four cladding layers.
- Figure 7: shows a material dispersion calculated at 25 locations in a 200 mm wafer
- Figure 8: shows an experimental setup for chromatic dispersion measurement.
- Figure 9: shows and example of an interference spectrum with a single cladding silicon nitride waveguide and a measured dispersion of a single cladding waveguide for different core width values.
- Figure 10: shows a measured dispersion of a silicon nitride waveguide including two extra cladding layers.

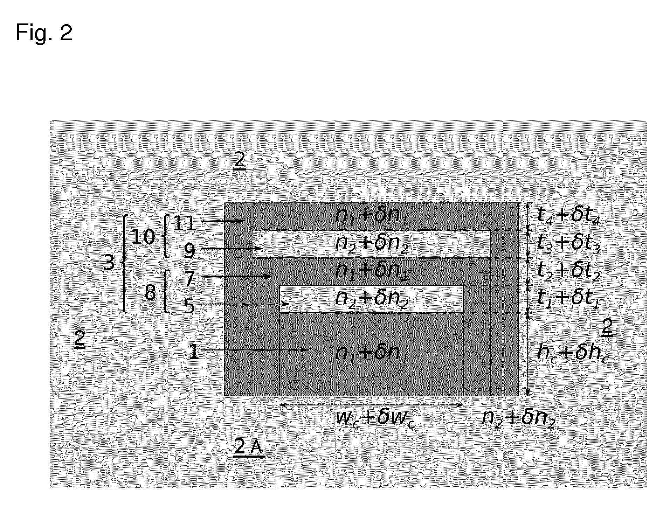

An inventive waveguide is schematically shown in figure 2. The waveguide is formed by a core 1 with a core width *w_{c}* and a core height *h_{c}.* A multi-cladding arrangement 3 is located on top of the core 1. In the present embodiment, this multi-cladding arrangement 3 consists of four cladding layers 5, 7, 9 11. However, the multi-cladding arrangement 3 may comprise more or less than four cladding layers as long as it at least consists of two cladding layers. The core and the multi-cladding layer arrangement are embedded in an outer cladding 2 having refractive index *n*₂.

In the present embodiment, the cladding layers 5, 7, 9, 11 form cladding layer pairs 8, 10 where each cladding layer pair 8, 10 consists of an upper cladding layer 7, 11 and a lower cladding layer 5, 9. Note that the multi-cladding arrangement 3 may consist of any number of cladding layer pairs 8, 10 as long as at least one cladding layer pair 8, 10 is present. However, having more than two cladding layer pairs 8, 10 does not add beneficial effects in terms of manipulating the dispersion profile. Hence, embodiments of the inventive waveguide typically include two or four cladding layers 5, 7, 9 11. The guidance of the light is provided by embedding the core and the multi-cladding layer arrangement an outer cladding 2 having refractive index *n*₂.

In the present embodiment, the core 1 of the waveguide and the upper cladding layer 7, 11 in each cladding layer pair 8, 10 are made of silicon nitride (Si_{X}N_{Y}) which has a refractive index *n*₁ of 1.995 at a wavelength of 1550 nm. The lower cladding layers 5, 9 of each cladding layer pair 8, 10 of the present embodiment are made of fused silica (amorphous silica) which has a refractive index *n*₂ of 1.445 at a wavelength of 1550 nm. As can be seen, the ratio *n*₁/*n*₂ of the refractive index *n*₁ of silicon nitride and the refractive index *n*₂ of silica is 1.38. Besides providing an advantageous ratio *n*₁/*n*₂ of refractive indices, using silicon nitride and silica also offers the advantage that these materials can be grown on substrates by CMOS-production processes so that they can be realized in the context of CMOS-fabrication. However, other material combinations than silicon nitride and silica are possible assumed that they are transparent in the desired wavelengths range and are able to provide a ratio of *n*₁/*n*₂ between 1.25 and 1.45.

In the present embodiment, a silicon substrate is first grown (which is not shown in figure 2), and a layer of an outer cladding 2A is grown on top of it. The core is grown on top of the outer cladding 2A by suitable growth techniques to a certain thickness *h_{c}* and etched to a certain width *w_{c}*. The cladding layers 5 to 11 of the multi-cladding arrangement 3 are subsequently grown over the core 3. Note that, in the present embodiment, the lower cladding layer 5, 9 in each cladding layer pair 8, 10 is only grown on top of the underlying core 1 and the underlying cladding layer 7, respectively, while each upper cladding layer 7, 11 of the cladding layer pairs 8, 10 is also formed on the side walls of the underlying core and the underlying layers, respectively. In a last step, the embedding cladding 2 is grown on the side walls and on top of the multi-cladding arrangement 3.

The core height of the inventive waveguide has a core height value h_{c} in the range between 0.2 µm and 1.0 µm while the core width has a core width value w_{c} in the range between 0.5 µm and 2.5 µm. The cladding layers have thicknesses with thickness values tᵢ in the range between 0.01 µm and 0.5 µm. Note that the cladding layers typically differ in their thickness values tᵢ since these values, as well as the core height value h_{c} and the core width value w_{c}, are optimized values by which a desired dispersion profile is realized.

An optimized core height value, an optimized core width value and optimized thickness values of the cladding layers are established in a two-step optimization process which is done numerically. The dispersion engineered profile can be retrieved using an optimization algorithm (for ex. a genetic algorithm)The dispersion engineering can be also done by progressive optimization in two steps. In a first step, a preliminary core height value, and preliminary thickness values of the cladding layers are obtained by an optimization, outgoing from an initial core height value, an initial core width value and initial thickness values of the cladding layers, so that the resulting dispersion is between +/-20 ps/nm/ km¹ at least for a wavelength range of 500 nm. However, it is advantageous if the optimization in the first step is done so that the resulting dispersion is between +/-20 ps/nm/km at least for a wavelength range of at least 700 nm. Preferably the resulting dispersion is between +/-20 ps/nm/km in a range from 1.3 µm to 2.4 µm.

In the second step of the optimization method, the preliminary core height value, the preliminary core width value and preliminary thickness values of the cladding layers are further optimized to shift the dispersion profile to desired higher or lower dispersion values so that the optimized core height value, the optimized core width value and the optimized thickness values of the cladding layer are obtained.

The optimization process described so far works already well with only one cladding layer pair 8. However, if a second cladding layer pair 10 is present, the thickness values *t*₃, *t*₄ of the cladding layers 9, 11 of the second cladding layer pair 10 may be used in a further optimization step for flattening the dispersion profile. Depending on the material dispersion due to the refractive index of the core, there are two possibilities:
(A) If the absolute value of the material dispersion is large (>100 ps/nm/km), the ratio *n*₁/*n*₂ would be increased and/or the thicknesses t₃ and t₄ would be increased. In this case, the four layers of the first and second cladding layer pairs play an almost equal role in the engineering of the dispersion profile.
(B) If the absolute value of the material dispersion is not large (<100 ps/nm/km), the opposite applies. The ratio *n*₁/*n*₂ would be decreased and/or the thicknesses t₃ and t₄ would be decreased. In this case, the last two layers of the second cladding layer pair, which is located on top of the first cladding layer pair, offer the fine adjustment of the dispersion profile.

Note that although the waveguide of the present embodiment consists of silicon nitride and silica the described optimization method also works with other material combinations. In this case, the wavelength range mentioned with respect to the first optimization step may be different to the wavelength range mentioned above.

In the following, further details of the optimization process will be described with respect to the embodiments presented below.

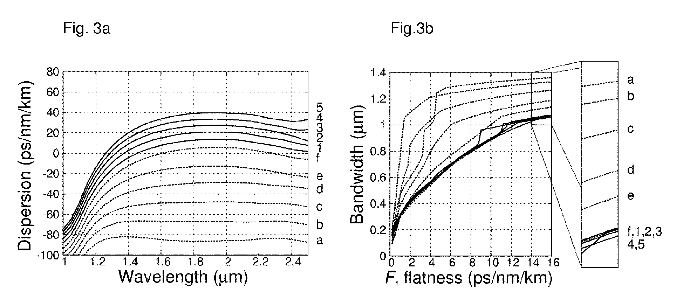

To demonstrate the engineering mechanism on which the present invention is based it is first shown how dispersion can be engineered by adding only two cladding layers, i.e. *t*₃ *= t₄* = 0 in Figure 2. As a concrete example, a waveguide with a core made of silicon nitride and one cladding layer pair with an upper and a lower cladding layer 5, 7 is considered. While the upper cladding 7 layer is made of silicon nitride (refractive index *n*₁ = 1.995 at a wavelength of 1550 nm) the lower cladding layer 5 is made of fused silica (refractive index *n*₂ = 1.445 at a wavelength of 1550 nm). The aim is to seek simple rules that allow for a predictable change of the dispersion profile. To reach this aim, the first step was optimizing the values of *h_{c}, w_{c}, t*₁ and *t*₂, in order to have very low dispersion over the largest bandwidth (see profile dotted line f in Fig. 3a). The second step is to optimize *h*_{c}, *w*_{c}*, t*₁ and *t*₂ to produce a flat dispersion profile in the normal region (the resulting profile is plotted as dotted line b). In order to avoid unrealistic dimension values that could produce even flatter dispersion profiles but could hardly be fabricated, *t₁, t*₂, *h_{c},* and *w_{c}* were changed in steps of 10 nm. Thus *h_{c}* = 0.85 µm, *w_{c}* = 1.7 µm, *t*₁ = 0.15 µm, and *t*₂ = 0.22 µm for the low absolute dispersion case and *h_{c} =* 0.72 µm, *w_{c}* = 2.2 µm, *t*₁ = 0.21 µm, and *t*₂ = 0.19 pm for the normal dispersion case. To determine how related are both spectra in terms of waveguide parameters, i.e. to verify if it is possible to smoothly go from one dispersion profile to the other one, just by a simple change of the parameters the parameters *t*₁, *t*₂, *h_{c}* and *w_{c}* were *linearly* changed between the two optimized set of values (). All the results are shown in the six dispersion profiles plotted in dotted lines in Fig. 3(a) marked as spectra a, *b,* c, *d,* e, and f: the flatness is preserved just by changing linearly t₁, t₂, h_{c}, and w_{c}. Remarkably, the profile represented by the dotted line b is extremely flat with dispersion varying less than 1.6 ps/nm/km over 1010 nm: this flatness level has no precedents in any type of integrated waveguides and is comparable to the flattest profiles that can be generated in photonic crystal fibers, as they are described in Ferrando, E. Silvestre and P. Andres, "Designing the properties of dispersion-flattened photonic crystal fibers," Opt. Express 9, 687-697 (2001). To illustrate further that the dispersion characteristics can follow a predictable evolution, *h_{c}* was linearly increased from 0.85 to 1 µm and the resulting profiles are depicted as solid lines (spectra 1, 2, 3, 4, and 5) in Fig. 3(a): the dispersion can be shifted vertically as in the simple case with a single-cladding layer while preserving the flatness. Figure 3(b) shows the corresponding bandwidth as a function of the flatness, showing that in all the cases the bandwidth exceeds 800 nm for a flatness of 6 ps/nm/km.

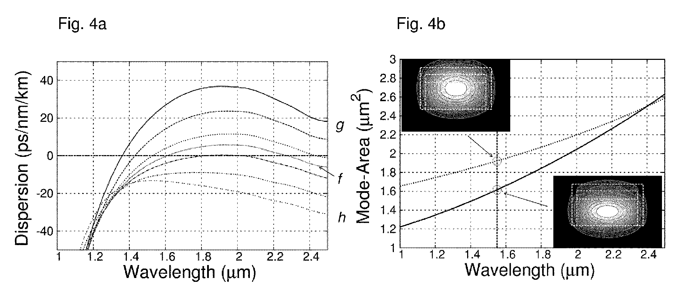

It is also possible to modify the dispersion in a predictable manner just by changing the thickness of the silica cladding layer 5 from *t*₁ = 0.1 to 0.2 µm as shown on Figure 4(a). The dispersion profile marked by the f in Figure 4(a) is chosen to be the optimized case with low dispersion. Note that even though the flatness is modified, the main impact of changing *t*₁ is shifting the profile vertically (line *g* corresponds to *t*₁ = 0.1 µm, while line h corresponds to *t*₁ = 0.2 µm): *t*₁ can therefore be a 'single parameter' that allows for predictable dispersion control.

The refractive index arrangement incorporating two extra cladding layers might change the mode profile and modify the effective mode-area of the waveguide. The impact on the mode confinement of this multi-cladding layer configuration is shown in Fig. 4(b). In solid lines is plotted the mode area of the structure with a silica layer, while in dotted lines is plotted the case when the silica cladding layer was substituted by a silicon nitride layer: the silica layer allows for a tighter mode confinement, which is the main requirement for a number of nonlinear devices on a chip. For long wavelengths there is no difference between both cases. In the insets, the mode profiles are depicted together with the waveguide structure, showing that most of the power is confined in the core when the silica layer is included, while when the silica is substituted by silicon nitride the mode is spread also over the two cladding layers.

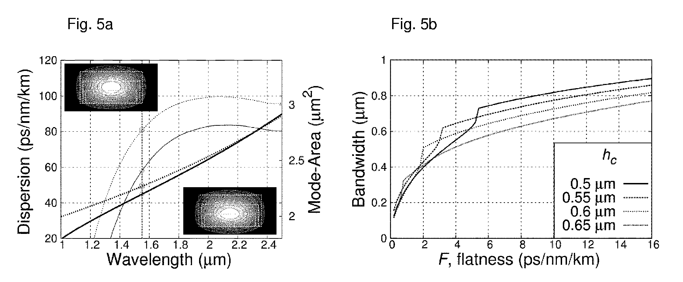

The dispersion engineering capabilities were obtained for a ratio of the refractive indices of *n*₁/*n*₂ = 1.37. An important question is to know how this ratio will affect the performance of the engineering process. To address this, a low-contrast cladding-refractive-index arrangement was investigated by considering the following refractive indices: for the first cladding layer 5 *n*₂ = 0.97×*n_{Si_{-X}N^{Y}}* and for the second cladding layer 7 *n*₁ = 0.985×*n_{Si_{X}N_{Y}},* and therefore a contrast of 1.5%. This makes a gradient of smoothly decreasing n values. The thicknesses *t*₁ and *t*₂ are varied from 0.1 to 0.4 µm, and the values of *h_{c}* and *w_{c}* are scanned to find flat dispersion profiles. An example of such a flat profile is shown in solid lines in Figure 5(a), where the dispersion is plotted as a function of wavelength for *h_{c}* = 0.55 µm and for *t*₁ = *t*₂ = 0.4 µm and *w_{c}* = 2.2 um. The dispersion is quite flat from 1.8 to 2.4 µm but not with the same flatness level than in waveguides with layers with dissimilar refractive indices. Note that due to the low refractive index contrast the mode extends over a large area since it is confined only due to the silica outer cladding, consequently the mode-area is larger than in the case with a silica cladding. In order to understand if this refractive index gradient has a great impact on dispersion, the dispersion for the case when the two extra layers had the same refractive as in the core was calculated and the results are shown in dotted lines for comparison. The dispersion is just shifted vertically with negligible change in the shape. This shows that even a 3% change of refractive index will not have a big impact in the dispersion profile. The mode area as a function of wavelength is plotted in Figure 5(a) where it is compared with the case when the first cladding was made of silica. By increasing the core height one does not see an appreciable change in the dispersion, and this is because the mode is spread over the whole Si_{X}N_{Y} region including the 0.8 µm thickness from the two extra layers.

Figure 5(b) shows the calculated bandwidth as a function of the dispersion flatness that if compared with Fig. 4(b) shows the limits of this refractive index arrangement (see: D. Bodenmüller, J.M. Chavez Boggio, H.N.J. Fernando, R. Haynes, and M.M. Roth "Precise control of the dispersion flatness in silicon nitride waveguides by cladding refractive index engineering," SPIE Photonics Europe Conference, SPIE Proceedings vol. 8429, Optical Modelling and Design II, 84290V (June I, 2012)). Note that the flatness is obtained at the expense of largely increasing the mode area and the number of modes propagating through the silicon nitride waveguide. Other arrangements involving this gradient of small contrast refractive index were analyzed. For example, by choosing *n*₁ = 0.97×*n_{SiO₂}* and *n*₂ = 0.985 × *n_{SiO₂}* or *n*₁ = 0.97 × *n_{Si_{X}N_{Y}}* and *n*₂ = 0.985 × *n_{Si_{X}N_{Y}},* no appreciable improvement was obtained in terms of dispersion control if compared with the single-cladding waveguide described by D. Bodenmüller et al.

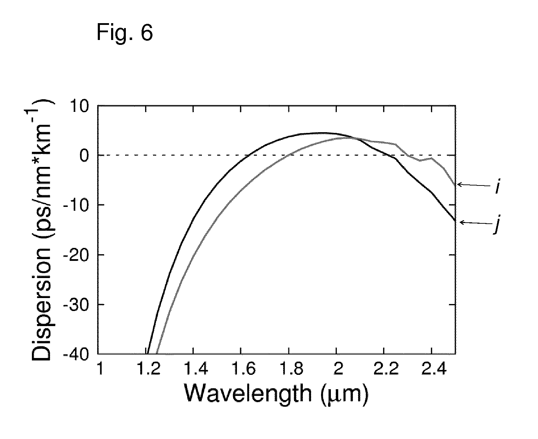

To improve the dispersion engineering capabilities, two extra cladding layers are added with refractive indices *n*₁ = n(SiN_{X}) and *n*₂ = n(SiO₂) and thicknesses *t₃ = t₄ =* 20 µm, respectively. For comparison purposes the parameters of the first two layers are those which resulted in the flat and low dispersion profile shown as dotted line f in Fig. 3a when the first two layers were optimized. The result with four layers is plotted in Figure 6 as line *i*, while with line *j* it is shown the case when *t₃ = t₄ =* 0. Note that the dispersion profile obtained with two layers is appreciably modified making it flatter at longer wavelengths.

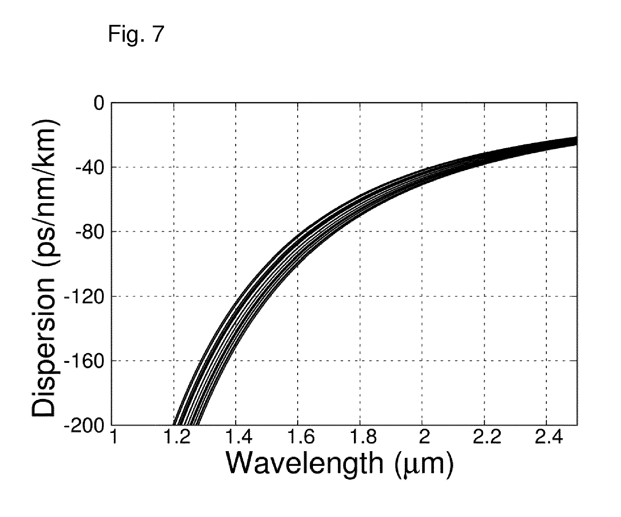

The impact of fluctuations of the refractive index and dimensions is analyzed for the case of a waveguide with a silicon nitride core and a silica cladding. Due to unavoidable uncertainties during the fabrication process of the silicon nitride waveguides, the refractive index and the transversal dimensions might not correspond to what was originally conceived. Consequently, if the fabrication inaccuracies are important enough the designed ultra-flat dispersion profile might not be as flat as initially intended once the Si_{X}N_{Y} waveguide is fabricated. To assess the impact that refractive index and transversal dimension random fluctuations will have on dispersion, several PECVD-Si_{X}N_{Y} films were grown with a specific refractive index target and Si_{X}N_{Y} thickness (750 nm). Both the refractive index and the thickness were measured at locations evenly scattered over the 200 mm wafer. Figure 7 shows the refractive index for 25 wafer locations and their corresponding calculated material dispersions. Note that the refractive index fluctuation will provoke an uncertainty of the dispersion of ∼20 ps/nm/km at 1550 nm and 7 ps/nm/km at 2500 nm. From a practical point of view, a way to compensate this uncertainty that essentially produces a vertical shift of dispersion will be by simply changing the core height of the waveguide.

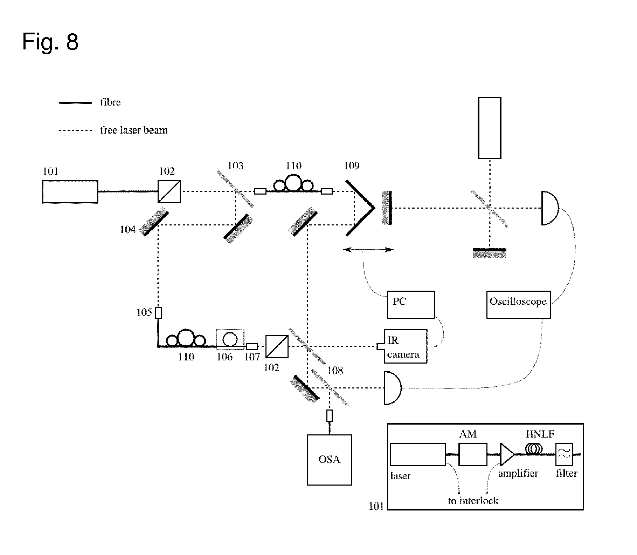

Silicon nitride waveguides were fabricated without extracladding layers and with two extra-cladding layers. Accurate measurements of the chromatic dispersion of these silicon nitride waveguides were done using a low-coherence frequency domain interferometry technique as it is described in J. Y. Lee and D. Y. Kim "Versatile chromatic dispersion measurement of a single mode fiber using spectral white light interferometry," Optics Express, Vol. 14, Issue 24, pp. I 1608-1 1615 (2006). The experimental arrangement is shown in Figure 8. A supercontinuum source 101 (abbreviated SC in the following) with a spectrum spanning from 1.3 to 1.8 µm serves as the low coherence light. The SC light is collimated using and objective 102 and polarized with a broadband polarizer. Then the light undergoes free space propagation with a spot size of around 3.5 mm. With a beam splitter 103 the SC light is split into the two arms of the interferometer, in one arm (the reference one) a corner cube 109, which is placed on a motorized translation stage, allows adjustment of the optical path length to obtain the interference pattern. The other arm (the sample arm) contains mirrors 104 to redirect the SC light into an objective 105 that focus the light in a lensed fibre 110 to finally couple the light into the waveguide under test. An almost identical lensed fibre 110 is placed in the reference arm to balance dispersion of the fibre that is used to couple light into the waveguide 106; in this way the low dispersion of the short waveguides (2.5 - 4.9 cm length) will not be overwhelmed by the dispersion from the lensed fibre 110 and this should minimize systematic errors.

The light from both arms is combined using a beam combiner 108 and the interference signal is detected using an optical spectrum analyzer (OSA). The total power from each arm is at most 100 µW in the described arrangement - losses come from the beam-splitters, mirrors, objectives, and the coupling into the fibres. How accurate is the measurement depends on how accurate the position of each maximum can be measured. However any minute change (sub-micron scale) of the optical path length of one of the arms will shift the maxima position adding noise to the measurement. To reduce the impact of noise, the spectrum (300 nm wide) was taken with a scanning time of only 0.5 seconds. Since the phase shift Φ between two consecutive maxima is 2π, the interference spectrum allows retrieving the phase shift as a function of frequency. By fitting Φ with a third order polynomial and by taking the derivatives, the group delay, the second and the third order dispersion are calculated as a function of the wavelength. In the measurements, the pellicle beam splitter vibrates and might be the major source of noise. To minimize that, 50 spectra were taken which are superimposed at a particular maximum located roughly at the center of the 300 nm measurement span. The average of the 50 spectra allows to calculate Φ vs λ. To subtract the contribution to dispersion from the fibres and other components the following procedure is done: the waveguide is removed and identical measurement is performed without the waveguide, the group delay is calculated from Φ vs λ and this value is subtracted from the group delay value found when the waveguide was included. To verify the repeatability of the measurement, the 50 spectra were recorded several times under identical conditions and the resulting dispersion profiles were compared between them.

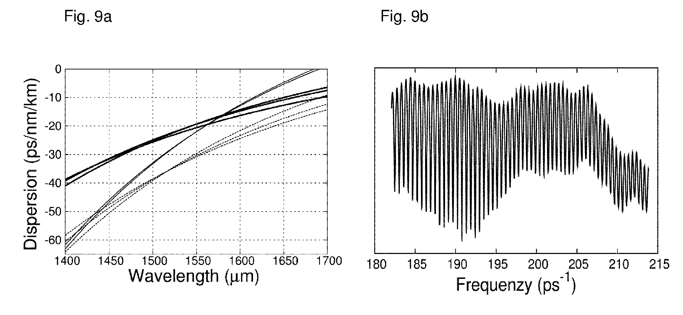

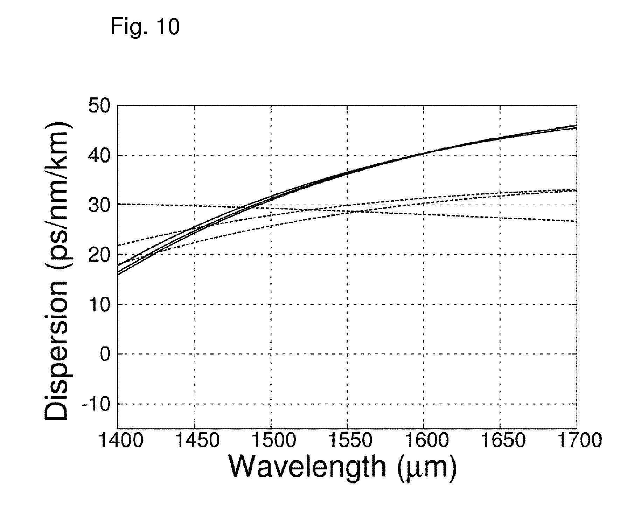

The experimental verification of the feasibility of the invention starts by considering a waveguide without extracladding layer fabricated with a silicon nitride core and a silica outer cladding. The core height was fixed to h_{c} = 0.75 µm While the core width was w_{c} = 1.3, 1.5 and 1.8 µm. The material refractive index of the silicon nitride corresponds to the ones plotted in Figure 8. Six different Waveguide lengths were fabricated (from 2.5 to 4.85 cm) to assess the impact of measurement errors. Figure 9(a) shows a typical averaged interference spectrum having around 60 maxima. From this spectrum the dispersion is retrieved and the result is shown in Figure 9(b) for a waveguide with L = 4.848 cm and w_{c} = 1.3 µm (lines I), w_{c} = 1.5 µm (lines II), w_{c} = 1.8 µm (lines III). To assess the error of each measurement more than one measured dispersion profile were plotted for each core width, showing that good repeatability was obtained with the experimental arrangement. As expected from simulations, as the core width increases the flatness is improved. Then, the dispersion of the engineered waveguide consisting of a silica cladding with t₁ = 40 nm thickness and a silicon nitride cladding of thickness t₂ = 200 nm was measured. The results are plotted in Figure 10 for the cases of w_{c} = 1.3 (lines IV) and 1.5 µm (solid lines). Note that now there is anomalous dispersion over the whole measured range (1400-1700 nm). Furthermore, the dispersion is now flatter than the single-cladding waveguide. This shows for the first time that dispersion engineering in integrated waveguides is possible by appropriate choice of geometry and refractive index parameters.

In summary, this invention shows that arbitrary dispersion control is achieved in waveguides with two cladding layers, and in particular with four cladding layers, with appropriate dimensions and refractive indices. The first two can allow for good dispersion manipulation while the other two will provide more fine adjustment and help to attenuate the impact that fluctuations of the refractive index (δn1, δn2) and dimensions (δt₁, δt₂, δt₃, δt₄, δh_{c}, δw_{c}) will have on dispersion. It is proofed that there is an optimum refractive index ratio *n*₁/*n*₂ (= 1.25 - 1.45) that allows for the best dispersion engineering freedom and provides low sensitivity to fabrication inaccuracies of submicron waveguides. The dimensions are optimized to ensure small mode area and most of the energy propagating in the fundamental mode.

The main characteristics of the dispersion engineered waveguides using this multi-cladding-layer approach are:
- The second order dispersion can be flattened (+/- 0.5 ps/nm/km variation) over more than 1000 nm.
- The third order dispersion can be flattened (+/- 0.01 ps/nm²/km variation) over more than 1000 nm.
- The dispersion can be vertically shifted, without changing its flatness, by simply changing the value of *t*₁.
- By correctly choosing the ratio between *n*₁/*n*₂ (1.25 - 1.45), maximize the dispersion engineering capabilities while being robust to fluctuations of the refractive index (δ*n*₁, δ*n*₂) and dimensions (δ*t*₁, δ*t*₂, δ*t*₃*,* δ*t*₄, δ*h*_{c}, δ*w_{c}*).
- Four cladding layers are necessary in order to have ultra-flat dispersion profiles with anomalous or normal dispersion.
- The mode area is kept small to enhance the nonlinear properties.

These properties are unique of the proposed technique and not matched by previous investigations.

The applications of the dispersion engineered waveguides are for nonlinear devices (wavelength converter, frequency comb generator, supercontinuum generation, miniature oscilloscope, etc.) as well as linear ones (slow light, dispersive elements) devices.

## Claims

**1.** A waveguide comprising a core (1) with a refractive index and a multi-cladding arrangement (3) on top of the core (1), where
- the multi-cladding arrangement (3) consists of a staple of one or more cladding layer pairs (8, 10);
- each cladding layer pair (8,10) is composed of an upper cladding layer (7, 11) having a first refractive index *n*₁ that equals the refractive index of the core (1) and a lower cladding layer (5, 9) having a second refractive index *n*₂,
- the ratio *n*₁/*n*₂ of the first refractive index *n*₁ to the second refractive index *n*₂ is between 1.25 and 1.45, and
- the core (1) and the multi-cladding arrangement (3) are embedded in an outer cladding (2, 2A) having a refractive index that equals the second refractive index *n*₂.

**2.** The waveguide as claimed in claim 1, in which the multi-cladding arrangement (3) has one cladding layer pair (8).

**4.** The waveguide as claimed in claim 1, in which the multi-cladding arrangement (3) has two cladding layer pairs (8, 10).

**5.** The waveguide according to any of the preceding claims, in which the core (1) and each upper cladding layer (7, 11) are made of silicon nitride while each lower cladding layer (5, 9) is made of silica.

**6.** The waveguide according to any of the preceding claims, in which the core (1) has a core height with a core height value (*h_{c}*) in the range between 0.2 µm and 1.0 µm and a core width with a core width value (w_{c}) in the range between 0.5 µm and 2.5 µm, and in which the cladding layers (5, 7, 9, 11) of the cladding layer pairs (8, 10) have cladding layer thicknesses with thickness values (*t*₁, *t*₂, *t*₃, *t*₄) in the range between 0.01 µm and 0.5 µm.

**7.** A method for producing a waveguide with a desired dispersion value and a flat dispersion profile, comprising
- providing a layer (2A) of an outer cladding (2) on a substrate;
- providing a core (1) with a refractive index on the layer (2A) of the outer cladding (2); and
- applying a multi-cladding arrangement (3) on top of the core (1), where the multi-cladding arrangement (3) consists of a staple of one or more cladding layer pairs (8, 10) each cladding layer pair being composed of an upper cladding layer (7, 11) having a first refractive index *n*₁ that equals the refractive index of the core and a lower cladding layer (5, 9) having a second refractive index *n*₂, where the ratio *n*₁/*n*₂ of the first refractive index *n*₁ to the second refractive index *n*₂ is set to a value in the range between 1.25 and 1.45, and
- finishing the outer cladding (2), where the outer cladding (2, 2A) has a refractive index *n*₂.

**8.** The method as claimed in claim 7, in which
- the core (1) is provided with a core height having a core height value (*h_{c}*) in the range between 0.2 µm and 1.0 µm and with a core width having a core width value (*w_{c}*) in the range between 0.5 µm and 2.5 µm; and
- each cladding layer of the at least one cladding layer pair of the multi-cladding arrangement is applied up to a cladding layer thickness having a thickness value (*t*₁, *t*₂, *t*₃, *t*₄) in the range between 0.01 µm and 0.5 µm.

**9.** A waveguide comprising a core (1) with a refractive index and a multi-cladding arrangement (3) on top of the core (1), the multi-cladding arrangement (3) including at least a first cladding layer (7) having a first refractive index *n*₁ that equals the refractive index of the core (1) and a second cladding layer (5) having a second refractive index *n*₂, where the ratio *n*₁/*n*₂ of the first refractive index *n*₁ to the second refractive index *n*₂ is in the range of 1.25 to 1.45 and where the second cladding layer (5) is sandwiched between the core (1) and the first cladding layer (7), and where the core (1) and the multi-cladding arrangement (3) are embedded in an outer cladding (2, 2A) having a refractive index that equals the second refractive index *n*₂.

**10.** The waveguide as claimed in claim 9, in which the core (1) and the first cladding layer (7) are made of silicon nitride while the second cladding layer (5) is made of silica.

**11.** The waveguide as claimed in claim 9 or claim 10, in which the multi-cladding arrangement (3) further includes at least a third cladding layer (11) having a third refractive index that equals the first refractive index *n*₁ and a fourth cladding layer (9) having a fourth refractive index that equals the second refractive index *n*₂, where the fourth cladding layer (9) is sandwiched between the third cladding layer (11) and the first cladding layer (7).

**12.** The waveguide as claimed in claim 11, the third cladding layer (11) is made of silicon nitride while the fourth cladding layer (9) is made of silica.

**13.** The waveguide as claimed in any of the claims 9 to 12, in which the core (1) has a core height with a core height value (*h_{c}*) in the range between 0.2 µm and 1.0 µm and a core width with a core width value (w_{c}) in the range between 0.5 µm and 2.5 µm, and in which the cladding layers (5, 7, 9, 11) have cladding layer thicknesses with thickness values (*t*₁, *t*₂, *t*₃, *t*₄) in the range between 0.1 µm and 0.5 µm.

**14.** A method for establishing a core height value (*h_{c}*), an core width value (*w_{c}*) and thickness values (*t*₁, *t*₂, *t*₃, *t*₄) of the cladding layers in a waveguide as claimed in claim 6 or claim 13, or for establishing a core height value (*h_{c}*), a core width value (*w_{c}*) and thickness values (*t*₁, *t*₂, *t*₃, *t*₄) of the cladding layers used in the method of claim 8, in which
- in a first step, a preliminary core height value, a preliminary core width value and preliminary thickness values of the cladding layers are obtained by optimizing an initial core height value, an initial core width value and initial thickness values of the cladding layers so that the resulting dispersion is between ± 20 ps/nm/km at least for wavelengths in the range from 1.4 µm up to 1.9 µm, and
- in a second step, the preliminary core height value, the preliminary core width value and the preliminary thickness values of the cladding layers are further optimized to shift the dispersion profile to desired higher or lower dispersion values so that the optimized core height value, the optimized core width value and the optimized thickness values of the cladding layers are obtained, which then represent the core height value (*h_{c}*), the core width value (*w_{c}*) and the thickness values (t₁, t₂, t₃, t₄) of the cladding layers.

**15.** The method as claimed in claim 14, in which the cladding layer arrangement (3) comprises a first pair of cladding layers (8) and a second pair of cladding layers (10) and in which the thickness values (t₃, t₄) of the cladding layers (9, 11) of the second pair of cladding layers (10) are determined in an optimization step for flattening the dispersion profile.
